## Europäisches Patentamt
## European Patent Office
## Office européen des brevets

(19)

(11) Numéro de publication: **0 300 900**
**A1**

(12)

# DEMANDE DE BREVET EUROPEEN

(21) Numéro de dépôt: **88401879.7**

(22) Date de dépôt: **20.07.88**

(51) Int. Cl.⁴: **C 12 F 3/04**

(30) Priorité: **22.07.87 FR 8710375**

(43) Date de publication de la demande:
**25.01.89 Bulletin 89/04**

(84) Etats contractants désignés:
**AT BE CH DE ES FR GB GR IT LI LU NL SE**

(71) Demandeur: **SOCIETE COOPERATIVE AGRICOLE DE CANET**
**390 Avenue Commandant Demarne Canet**
**F-34800 Clermont l'Hérault (FR)**

(72) Inventeur: **Modot, Marcel**
**390 Avenue Commandant Demarne Canet**
**F-34800 Clermont L'Hérault (FR)**

**De Lapasse, Philippe**
**F-31800 Landorthe (FR)**

**Maistre, François**
**Le Moulin Bas Villeneuvette**
**F-34800 Clermont L'Hérault (FR)**

(74) Mandataire: **Bouju, André**
**Cabinet Bouju 38 avenue de la Grande Armée**
**F-75017 Paris (FR)**

(54) Procédé et installation de fermentation et utilisations s'y rapportant.

(57) Dans le procédé de fermentation, les vapeurs émises de la cuve de fermentation (1), résultant de la fermentation et entraînées par le CO2, sont soumises à une condensation.

Cette condensation est effectuée de façon fractionnée selon au moins deux étapes successives (5, 7) opérant à des températures voisines de -5°C à -15"C dans la première étape et de -15"C à -50°C pour la seconde étape.

Utilisation pour améliorer la qualité et/ou le rendement du produit de la fermentation, et en particulier de la production du vin.

EP 0 300 900 A1

## Description

### "Procédé et installation de fermentation et utilisations s'y rapportant"

La présente invention concerne un procédé de fermentation amélioré et une installation de fermentation pour la mise en oeuvre de ce procédé.

L'invention vise principalement, mais non limitativement, la fermentation du vin.

On sait que tout processus de fermentation génère du gaz carbonique qui s'échappe dans l'atmosphère en entraînant des arômes, des distillats d'alcool et de la vapeur d'eau.

Les travaux de GAY-LUSSAC et de PASTEUR donnent comme bilan chimique de la fermentation alcoolique vineuse :
- 48,4 g d'alcool éthylique
- 46,6 g d'anhydride carbonique (23,65 litres)
- 3,2 g de glycérine
- 0,6 g d'acide succinique
- 1,3 g de levure

pour 100 g de sucre de raisin.

Il a été tenté, à de nombreuses reprises, de récupérer les alcools, les arômes, les huiles de Fusel et l'anhydride carbonique qui émanent des caves de vinification. On a décrit en particulier dans le brevet français 2 307 037 un procédé dans lequel les vapeurs émises des cuves de vinification sont condensées puis réintroduites dans ces dernières.

Le but de cette condensation était de pouvoir réintroduire les condensats dans la cuve de vinification pour augmenter la teneur du vin en alcool.

Les résultats pratiques de toutes ces tentatives ont été mauvais : fonctionnement erratique de la colonne de condensation, insuffisance de la récupération des produits alcooliques, effet organoleptique négatif, etc.

Pendant une longue période, la demanderesse a procédé à des expériences, des mesures et analyses pour identifier les causes probables de ces insuccès et pour trouver des correctifs. Les causes sont nombreuses, et un certain nombre sera discuté ci-après. Il s'est avéré toutefois que les méthodes de correction convergent vers une même orientation, à savoir : le remplacement de la condensation pure et simple par une condensation fractionnée, réalisée selon des règles précises.

En effet, le vin n'est pas une simple solution hydroalcoolique, et la définition légale "produit de la fermentation du raisin frais ou du jus de raisins frais" indique clairement que le vin est le résultat de la transformation biologique d'un produit biologique. L'apparition des techniques modernes d'analyse (chromatographie en phase gazeuse avec perfectionnement des colonnes capillaires à phase greffée, chromatographie liquide hautes performances, spectrométrie de masse) ont permis l'identification et le dosage de près de 600 composés, la plupart volatils dont environ 200 esters, une cinquantaine d'alcools, environ 20 acétals, etc. Tout au long de la fermentation, certains composés sont totalement ou partiellement transformés, d'autres restent inaltérés : d'où l'évolution de la couleur, du goût, de l'arome, c'est-à-dire de la qualité du produit final. Le concept de flaveur (goût plus arôme) est évalué par le chimiste en considérant les constituants chimiques qui produisent la sensation : l'oenologue évalue les réponses que ces constituants évoquent chez le consommateur.

Les constituants ont des molécules lourdes ou légères. A partir des conclusions du chimiste et de l'oenologue, il est donc possible de déterminer les seuils de sélection par condensation fractionnée, et le choix entre la réintrégration des condensats dans la cuve ou leur élimination.

Le but de la présente invention est donc de remédier aux inconvénients des réalisations connues en créant un procédé de vinification amélioré qui permette d'augmenter soit la flaveur du vin soit le rendement de la production en vin, et plus généralement, un procédé de fermentation amélioré, ainsi qu'une intallation pour la mise en oeuvre de ce procédé.

Suivant l'invention, le procédé de fermentation dans lequel les vapeurs émises des cuves de fermentation, résultant de la fermentation et entraînées par le $CO_2$, sont soumises à une condensation, est caractérisé en ce que celle-ci est effectuée de façon fractionnée selon au moins deux étapes successives opérant à des températures voisines de -5°C à -15°C dans la première étape et de -15°C à -50°C pour la seconde étape.

Ainsi, selon le procédé conforme à l'invention, on condense dans une première étape essentiellement l'eau et les alcools lourds et dans une seconde étape essentiellement les alcools légers.

Selon une version avantageuse de l'invention, une partie au moins des condensats recueilis sont réintroduits dans la ou les cuves.

Selon une version préférée de l'invention, on réintroduit dans la ou les cuves un condensat dont le rapport alcools lourds sur alcools légers est favorable aux alcools légers.

Le condensat riche en alcools légers est celui recueilli dans la seconde étape de condensation. Ces alcools légers riches en arômes réintroduits dans les cuves permettent d'améliorer la qualité du produit de la fermentation, et en particulier la qualité du vin.

Lorsqu'il est nécessaire d'améliorer uniquement le rendement de la production en vin, l'on réintroduit dans la ou les cuves la totalité des condensats recueillis.

De préférence, on récupère le $CO_2$ sortant de la ou les cuves et on le comprime et/ou liquéfie.

Ce $CO_2$ peut être utilisé comme fluide réfrigérant dans les étapes de condensation.

Selon une version préférée de l'invention le $CO_2$ récupéré est injecté au fond de la ou les cuves pour brasser le contenu de celle(s)-ci et pour favoriser les réactions de fermentation.

La quantité de $CO_2$ injecté au fond de la ou les cuves peut être asservie à la température du contenu de celle(s)-ci pour régler cette température.

Par ailleurs, le $CO_2$ produit par le procédé conforme à l'invention peut également être utilisé pour la protection contre l'oxydation et pour éviter l'élévation de la température des fruits et autres produits végétaux qui sont stockés, après leur cueillette et avant leur introduction dans l'installation de fermentation.

Selon un autre aspect de l'invention, l'installation de fermentation pour la mise en oeuvre du procédé conforme à l'invention est caractérisée en ce que la partie supérieure de la ou des cuves de fermentation est reliée à au moins deux colonnes successives de condensation refroidies par un fuide réfrigérant, des moyens étant prévus pour régler la température à l'intérieur de la première colonne à une valeur comprise entre - 5°C et - 15°C et à l'intérieur de la seconde colonne à une valeur comprise entre - 15°C et - 50°C.

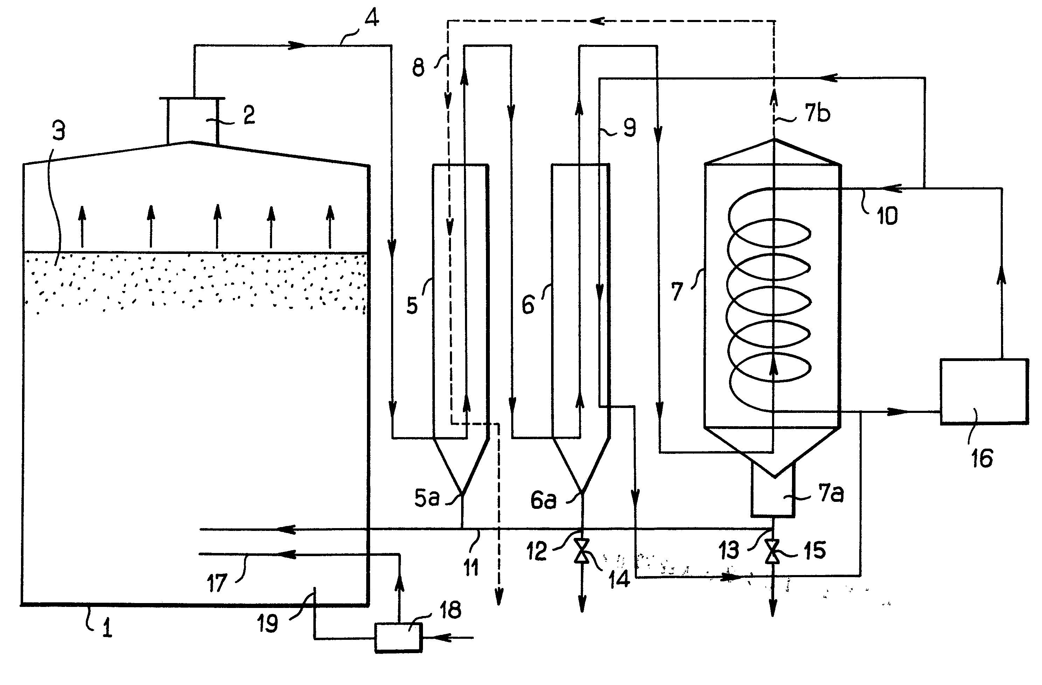

D'autres particularités et avantages de l'invention apparaîtront encore dans la description ci-après.La figure unique annexée, donnée à titre d'exemple non limitatif, est une vue schématique d'une installation conforme à l'invention.

On va d'abord décrire l'installation de fermentation conforme à l'invention, en référence à la figure annexée, dans le cas particulier d'une installation de vinification.

On voit sur cette figure que la partie supérieure 2 de la cuve de fermentation 1 contenant le raisin 3 en cours de fermentation est reliée par une tubulure 4 à trois colonnes successives 5, 6, 7 de condensation, refroidies par un fluide réfrigérant 8, 9, 10.

La température et le débit des fluides réfrigérants 8,9, 10 sont choisis de façon à pouvoir régler la température à l'intérieur des deux premières colonnes 5, 6 à une valeur comprise entre - 5°C et - 15°C et à l'intérieur de la dernière colonne 7 à une valeur comprise entre - 15°C et -50°C.

Selon la version préférée de l'invention, la température à l'intérieur des deux premières colonnes 5, 6 est réglée entre - 5°C et - 10°C pour la première 5 afin de condenser principalement l'eau et entre - 10°C et - 15°C pour la seconde 6 afin de condenser principalement les alcools lourds.

On voit également sur la figure annexée que la partie inférieure 5a, 6a, 7a des colonnes de condensation 5, 6, 7 est reliée à la cuve de fermentation 1 par une tubulure 11 pour réintroduire dans cette cuve une partie ou la totalité des condensats formés dans les colonnes. La tubulure 11 présente au droit des parties inférieures 6a, 7a des colonnes 6, 7 des dérivations 12, 13 équipées de vannes 14, 15 qui permettent de récupérer les condensats.

Le $CO_2$ issu de la cuve de fermentation 1 est récupéré, après passage dans les colonnes 5, 6, 7 en haut (voir référence 7b) de la dernière colonne 7. Ce $CO_2$ refroidit à une température comprise entre - 15°C et - 50°C dans la colonne 7 est introduit en tant que fluide réfrigérant dans la première colonne 5 (voir tubulure 8) pour refroidir celle-ci à une température de l'ordre de -5°C à -10°C.

Le fluide réfrigérant 9, 10 utilisé pour refroidir les colonnes 6 et 7 est de l'éthanol. Celui-ci est refroidi dans un groupe frigorifique 16. Une partie de cet éthanol est envoyé par la tubulure 10 dans la colonne 7 et une autre par la tubulure 9 dans la colonne 6.

Les températures à l'intérieur des colonnes 6 et 7 sont réglées en fonction de la température et du débit de l'éthanol dans les tubulures 9 et 10.

Une partie du $CO_2$ issu de la colonne 7 peut être comprimé et/ou liquéfié en vue d'autres utilisations.

Une partie du $CO_2$ récupéré est réintroduit dans le fond de la cuve 1 par une tubulure 17 pour brasser le contenu de cette cuve et pour régler la température de celle-ci. A l'aide d'un régulateur de débit 18 associé à une sonde de température 19 placée à l'intérieur de la cuve 1, on peut asservir la quantité de $CO_2$ réintroduit à basse température au fond de la cuve 1 à 1a température régnant dans cette cuve pour régler cette température.

On va maintenant décrire plus en détail le procédé selon l'invention, en commençant par la description des différentes fractions de condensation qui se présentent lors de la mise en oeuvre du procédé et les servitudes qui en découlent.

1 - Premier condensat : c'est l'eau elle-même.

La condensation de l'eau est très bonne dès que l'on atteint des températures voisines de 0°C. Par contre, si l'on emploie des températures beaucoup plus basses, la condensation est brutale et peut se transformer en congélation. Il s'ensuit des irrégularités de fonctionnement pouvant prendre des proportions rédhibitoires si la congélation est importante. Dans un mélange soumis à condensation, il est connu que la température de congélation baisse d'environ 1°C pour chaque 2% d'alcool présents. Pour un condensat contenant 20% d'alcool (teneur rencontrée en début de phase fermentaire comme en fin de fermentation), le point de congélation n'est donc que de -10°C. Certains expérimentateurs, soucieux de condenser les vapeurs à forte teneur en alcool, ont utilisé des températures bien inférieures aux - 10°C cités : ils se sont alors heurtés au phénomène de congélation lorsque la teneur alcool était trop faible.

2- Second groupe de condensats : il s'agit des alcools et autres produits organiques lourds.

Ces produits sont les premiers à se condenser après l'eau, et il a été constaté que des flaveurs désagréables étaient justement liées à ces produits, tout particulièrement aux produits d'un poids de l'ordre de 1.000 g/l et au-dessus. L'élimination des produits lourds ou leur gommage doit être d'autant plus poussé que l'on cherche à faire un vin de qualité.

3- Troisième groupe de condensats : les alcools légers et arômes.

La flaveur du vin vient d'un équilibre dans le rapport alcools lourds/alcools légers : c'est là qu'intervient le rôle de l'oenologue et sa science. L'expérience et les esais montrent un avantage qualitatif certain lorsque les alcools légers prennent le pas sur les alcools lourds. La condensation de ce troisième groupe de condensats ne peut être réalisée qu'au-delà de -30°C, ce qui ne peut être valablement réalisé qu'en éliminant le risque de congélation signalé au paragraphe 1 "Premier condensat".

4- Quatrième condensat : l'anhydride carbonique..

La pureté du $CO_2$ recueilli est fonction du seuil de température utilisé en phase 3. Chargé, même à faible concentration, d'alcools légers et d'arômes, ce $CO_2$ est impropre à un certain nombre d'applications, notamment alimentaires ou médicales : il doit subir un certain nombre de traitements destinés à faire disparaître les éléments non souhaités. On est donc en face d'un produit à usages limités.

Par contre, si la condensation finale a été faite à température suffisamment basse, le $CO_2$ pourra être employé pour la gamme complète des applications, avec le label alimentaire, ce qui améliore la rentabilité de l'installation.

Les données du problème ayant été ainsi définies, il est possible de choisir des méthodes de réalisation permettant l'optimisation des facteurs.

Dans la pratique, il faut faire face à une très grande dispersion des compositions des condensats, d'un terroir à l'autre, d'une année à l'autre. La palette des vins offerts au consommateur prouve bien l'ampleur du problème. Il n'en demeure pas moins vrai que la teneur des gaz en produits organiques va de zéro en début de fermentation pour dépasser 50% en pleine fermentation avant de revenir à zéro. De plus, pour des raisons économiques évidentes, plusieurs cuves de fermentation sont inévitablement reliées au système de sélection. Pour des raisons de production, les cuves ne sont donc jamais au même stade de fermentation, et l'installation ne fonctionne donc qu'exceptionnellement en régime établi. Le procédé et l'installation conformes à l'invention permettent d'atteindre tous les objectifs visés ci-dessus.

Le procédé selon la présente invention consiste à réaliser une condensation fractionnée, dans au moins deux colonnes ou étages de condensation selon le schéma de la figure annexée.

Le procédé mis en oeuvre est le suivant :

Dans une première étape (colonnes 5 et 6), on condense l'eau et les fractions lourdes. A cet effet, le réfrigérant 9 travaille dans la plage de - 5°C à - 15°C. Cette étape a deux fonctions majeures :
- elle protège les colonnes ou étages suivants des risques de congélation compte tenu de la température du réfrigérant et celle du gaz sortant des cuves,
- elle élimine l'essentiel des alcools lourds du circuit de traitement aval, ouvrant ainsi l'éventail des choix de l'oenologue avec les possibilités de rejet pur et simple ou de mélange dans des proportions définies. Dans cette étape, la colonne 5 fonctionne comme un échangeur gaz/gaz, le réfrigérant 8 employé étant le $CO_2$ purifié recueilli en fin de circuit de l'installation.

Dans la deuxième étape, la colonne utilisée est un échangeur liquide/gaz, dont le réfrigérant (alcool éthylique, $CO_2$, etc.) permet d'atteindre des températures inférieures à -30°C, pour obtenir (le risque de congélation ayant été éliminé par la première colone ou étage) une condensation poussée des alcools restants. Ces alcools légers, chargés d'arômes, sont réinjectés, à l'initiative de l'oenologue, dans les cuves de fermentation. Ils augmentent la teneur en alcool de 2 à 3/10 de degré environ comme l'ont montré les mesures effectuées sur plus de 14 campagnes de vinification.

Cette deuxième colonne ou étage permet en outre la production d'un $CO_2$ alimentaire, de haute pureté, à forte valeur marchande.

L'utilisation de deux colonnes ou étages est un minimum nécessaire. L'emploi de colonnes ou étages supplémentaires est souvent avantageux sur le plan de la sélection des condensats.

Ainsi, comme indiqué sur la figure annexée, la première colonne peut être dédoublée, de façon à obtenir un premier condensat en majeure partie à base d'eau en phase 1, en majeure partie à base d'alcools lourds en phase 2. Les mélanges ainsi obtenus évitent de surcharger les colonnes ou étages suivants ; on évite ainsi de surdimensionner les appareils et d'accroître les frais d'exploitation.

Dans la mesure où on recherche la condensation quasi totale des produits légers, il peut être souhaitable de multiplier le nombre des colonnes ou plateaux, pour limiter le volume des condensats à chaque stade, et moduler les températures négatives de chacun d'eux dans un but à la fois technique et économique.

Le procédé selon l'invention présente encore les particularités suivantes :
- Le $CO_2$ purifié comme expliqué plus haut est récupéré, comprimé pour certaines applications à portée immédiate, liquéfié pour être utilisé dans d'autres applications ou commercialisé.
- Pour les colonnes ou échangeurs de températures, l'alcool éthylique ou autre fluide cryogénique serait classiquement à utiliser, mais dans tous les cas, toutes les sécurités nécessaires doivent être mises en place pour éviter qu'une fuite de circuit ne mette en contact vin et réfrigérant. Une solution consiste à utiliser comme réfrigérant le $CO_2$ liquide, produit endogène, ne présentant aucun danger ni même aucun risque de réaction psychologique négative des écologistes.L'utilisation du $CO_2$ endogène apporte une économie non négligeable sur les plans installation et consommation.
- La maîtrise des températures en vinification est un des points clés de la qualité du produit final, et si chaque vin a une température idéale d'élaboration, on sait que pour chaque degré d'alcool formé, la température de cuve s'élève de 1,3°C. Toutefois la plage idéale se situe, selon les couleurs, entre 15 et 25°C, comme température maximale de cuve. Il arrive que, dans certaines conditions d'apports de vendanges, de variations de la température ambiante et de divers facteurs biologiques, la température du cuve monte brutalement. On dit alors que la cuve s'emballe, ce qui peut avoir des incidences sur la qualité,et conduire à des débordements de liquide. La demanderesse s'est attachée à réaliser une régulation de température instantanée, permettant l'introduction en cuve de $CO_2$ liquéfié, freinant ou arrêtant les emballements, et permettant à l'oenologue de reprendre, par des moyens classiques, la maîtrise de la fermentation, ce qui donne une différence de température supérieure à 80°C.

Cette opération a une portée incalculable sur la qualité de la vinification.

- La condensation fractionnée peut être suffisamment maîtrisée pour que le CO2 sortant des colonnes de condensation se fasse à une température relativement constante, compatible avec le système de régulation, ce qui évite de passer par un stade de liquéfaction trop important, donc onéreux.

- Pour obtenir un bon échange thermique entre CO2 et masse liquide, il est recommandé d'injecter le CO2 près du fond de cuve, de façon à augmenter le brassage en cuve et faciliter une bonne vinification. On procède, de cette façon, à un remontage avant l'heure.

- Un dernier progrès a été réalisé dans la phase pré-vinification. Les grappes vendangées doivent être stockées en bennes, tout comme les raisins cueillis par les machines à vendanger, avant d'être introduits dans la cuve. Il se produit un début de fermentation néfaste, surtout en période de fortes chaleurs. La demanderesse a mis au point un stockage de vendange sous CO2 provoquant un inertage, mais provoquant de surcroît une suppresion des montées en température de la vendange.

**Revendications**

1. Procédé de fermentation dans lequel les vapeurs émises des cuves de fermentation (1), résultant de la fermentation et entraînées par le CO2, sont soumises à une condensation, caractérisé en ce que celle-ci est effectuée de façon fractionnée selon au moins deux étapes successives (5, 7) opérant à des températures voisines de -5°C à -15°C dans la première étape et de -15°C à -50°C pour la seconde étape.

2. Procédé conforme à la revendication 1, caractérisé en ce qu'une partie au moins des condensats recueillis sont réintroduits dans la ou les cuves (1).

3. Procédé conforme à la revendication 2, caractérisé en ce que l'on réintroduit dans la ou les cuves (1) un condensat dont le rapport alcools lourds sur alcools légers est favorable aux alcools légers.

4. Procédé conforme à la revendication 1, caractérisé en ce que l'on réintroduit dans la ou les cuves (1) la totalité des condensats recueillis.

5. Procédé conforme à l'une des revendications 1 à 4, caractérisé en ce qu'on récupère le CO2 sortant de la ou les cuves (1) et on le comprime et/ou liquéfie.

6. Procédé conforme à la revendication 5, caractérisé en ce que le fluide réfrigérant (8) utilisé dans les étapes de condensation est le CO2 récupéré.

7. Procédé conforme à l'une des revendications 5 ou 6, caractérisé en ce que du CO2 récupéré est injecté au fond de la ou les cuves (1) pour brasser le contenu de celle(s)-ci et pour favoriser les réactions de fermentation.

8. Procédé conforme à la revendication 7, caractérisé en ce que la quantité de CO2 injecté au fond de la ou les cuves (1) est asservie à la température du contenu de celles(s)-ci pour régler cette température.

9. Utilisation du CO2 produit par le procédé conforme à l'une des revendications 1 à 8, pour la protection contre l'oxydation et pour éviter l'élévation de la température des fruits et autres produits végétaux qui sont stockés après leur cueillette et avant leur introduction dans l'installation de fermentation.

10. Installation de fermentation pour la mise en oeuvre du procédé conforme à l'une des revendications 1 à 8, caractérisée en ce que la partie supérieure (2) de la ou des cuves (1) de fermentation est reliée à au moins deux colonnes successives de condensation (5, 7) refroidies par un fluide réfrigérant (8, 10), des moyens étant prévus pour régler la température à l'intérieur de la première colonne (5) à une valeur comprise entre -5°C et -15°C et à l'intérieur de la seconde colonne (7) à une valeur comprise entre -15°C et -50°C.

11. Installation conforme à la revendication 10, caractérisée en ce que la première colonne est dédoublée en deux colonnes successives (5, 6) dont la température est réglée entre -5°C et -10°C pour la première (5) pour condenser principalement l'eau et entre -10°C et -15°C pour la seconde (6) pour condenser principalement les alcools lourds.

12. Installation conforme à l'une des revendications 10 ou 11, caractérisé en ce que la partie inférieure (5a, 6a, 7a) des colonnes de condensation est reliée à la ou les cuves (1) pour réintroduire dans celles-ci une partie ou la totalité des condensats.

13. Installation conforme à l'une des revendications 10 à 12, caractérisée en ce qu'elle comprend des moyens pour récupérer le CO2 après passage dans les colones (5, 6, 7), pour réintroduire ce CO2 dans la ou les colonnes en tant que fluide réfrigérant (8) et pour réintroduire ce CO2 au bas de la ou les cuves (1) pour brasser et régler la température du contenu de celle(s)-ci.

0300900

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-B-   56 758  (J. JULLIEN et al.)<br>* Résumé; figures; page 1, colonne 2, alinéa 6 - page 2, colonne 1, alinéa 2; page 2, colonne 1, alinéa 10 - page 2, colonne 2, alinéa 3 * | 1,5,6, 10,11, 13 | C 12 F    3/04 |
| Y | | 1-6,12 | |
| Y,D | FR-A-2 307 037  (R. POINSARD et al.)<br>* Revendications; figures * | 1-6,12 | |
| A | FR-A-2 196 762  (UP-RIGHT INC.)<br>* Revendication 1 * | 1,9 | |
| A | FR-A-2 172 915  (A. FAVRE)<br>* Revendications; figures; page 2, lignes 3-22 * | 1,7,8 | |
| A | FR-A-  629 242  (P. PAUL-TREMELLAT)<br>* Figures; page 1 * | 8 | |
| A | FR-A-1 427 190  (LA CARBONIQUE) | | |

**DOMAINES TECHNIQUES RECHERCHES (Int. Cl.4)**

C 12 F

Le présent rapport a été établi pour toutes les revendications

| Lieu de la recherche | Date d'achèvement de la recherche | Examinateur |
|---|---|---|
| LA HAYE | 13-09-1988 | COUCKE A.O.M. |

EP.J FORM 1503 03.82 (P0402)